# EUROPEAN PATENT APPLICATION

(11) **EP 3 299 784 A1**
(43) Date of publication of application: **28.03.2018**
(21) Application number: 16190786.0
(22) Date of filing: 27.09.2016
(51) Int. Cl.: G01K 11/12, G01K 15/00

(54) **INTERPRETING THERMAL PAINT**

(71) Applicant: Siemens Aktiengesellschaft, 80333 München (DE)
(72) Inventor: Cashmore, Michael, Fiskerton, Lincoln LN3 4GD (GB); Couzens, Mark, Bicker, Boston PE20 3AZ (GB); Verheul, Jorrit, Lincoln, LN2 4WQ (GB)
(74) Representative: Maier, Daniel Oliver

(57) **Abstract**

A method of determining a temperature profile of a component 60 having a thermal paint coating (TPC) and comprises coating at least one calibration piece 62 with the TPC, exposing the calibration piece 62 to a predetermined temperature for a predetermined duration where the thermal paint changes colour and is indicative of the temperature experienced by the surface of the component 60 during operation. The calibration piece 62 is inspected with a colour meter 64 in at least two different locations to obtain a colour reading, and processing the colour readings and assigning a digital value corresponding to the colour reading which is indicative of the predetermined temperature. Then operating the component 60 for the predetermined duration, and inspecting the TPC on the component 60 with the colour meter 64 and determining at least one colour change location of the TPC and associating the digital value to that location on the component 60.

## Description

### FIELD OF INVENTION

The present invention relates to interpreting thermal paint and identifying the temperature the surface of a component of a turbine engine for example.

### BACKGROUND OF INVENTION

Currently, when gas turbine engine components have been painted with temperature indicating paint and operated in an engine test, the resulting colour-change thermal paint is interpreted by the human eye. The operator must first create calibration pieces by heating samples to pre-defined temperature set points for the predetermined exposure time. Once the engine test run has been completed, the components must be removed and taken to a specially adapted laboratory for thermal paint interpreting. This laboratory should have a good even light distribution with white lighting and white walls to prevent unwanted shadows and light leak. The components are then compared to the calibration pieces by eye (i.e. visual inspection) to determine the maximum temperatures that differing regions have been exposed to. This is highly time consuming and is subjective to the operator's interpretation of colour and the environment of the laboratory. In addition, one operator's interpretation might be different to another operator's and therefore inaccuracies from one component to another can easily occur. A serious drawback to this conventional process is the pre-defined temperature change points stated by the thermal paint supplier are limited to about 100°C. Therefore, it is possible that identification of the temperature the component has experienced is only accurate to 100°C. This is highly significant in terms of thermal lifing a component because a difference of up to 100°C near to its absolute thermal capability can dramatically alter its calculated life. In addition, the calculation of thermal stresses caused by thermal gradients within a component is also compromised because of the relatively low accuracy of reading the thermal paints colour changes.

In addition, there may be a significant interval or intervals between tests where the component is from a gas turbine engine which is in development. The interval(s) can be months and in some cases years. It is therefore important to have a very high confidence that two or more tests are entirely consistent with one another and therefore highly repeatable. In the conventional method of reading and interpreting thermal paint colour changes there remains a relatively high unreliability of readings particularly when comparing like-tests several months or years apart.

Therefore, one object of the present invention is to improve the accuracy and another to improve the reliability of interpreting thermal paint colour changes. Another object is to speeding up this time consuming process and yet another is to remove the current subjective nature associated with reading colour change by eye. Yet another objective is to improve the repeatability of colour readings and therefore consistency over a long period of time.

### SUMMARY OF THE INVENTION

In order to overcome the above problems and meet the objectives mentioned above and those that will become apparent, there is provided a method of determining a temperature profile of a component having a thermal paint coating. The method comprising the steps of: providing at least one calibration piece with the thermal paint coating, the thermal paint coating having an original colour, exposing the at least one calibration piece to at least one predetermined temperature for at least one predetermined duration representative of at least one temperature experienced by the surface of the component during operation and to cause the thermal paint coating to change colour from its first colour to at least one further colour, inspecting the at least one calibration piece with a colour meter in at least two different surface locations on the thermal barrier coating to obtain at least one colour reading, processing the at least one colour reading and assigning a digital value corresponding to the at least one colour reading which is indicative of the at least one predetermined temperature, operating the component for the at least one predetermined duration, inspecting the thermal barrier coating on the component with the colour meter after operation of the component and determining a location of the at least one further colour of the thermal barrier coating and associating the at least one digital value to that location on the component.

The thermal paint coating has a colour that is original or a first colour. The term original is intended to mean the colour of the thermal paint before exposing either the calibration piece to the predetermined temperature and/or that the component experiences during operation. The original colour can be the out-of-the tin, off-the-shelf or as-supplied colour, and also any colour the paint may have changed to in any pre-heating event prior to the exposing either the calibration piece or the component to the predetermined temperature.

The term 'operating the component' is intended to mean either that the component is a part of a complex device, such as a gas turbine engine, and the complex device is operated in a normal manner or that the component is a complex device such as a furnace or an over for example.

It may be advantageous to provide a plurality of calibration pieces for each at least one predetermined temperature. This can ensure very accurate calibration of colour readings and / or remove any erroneous readings.

The method may comprise exposing at least one and preferably two calibration piece(s) at each of a number of predetermined temperatures.

In this method a consecutive series of predetermined temperatures comprises at least two predetermined temperatures separated by a temperature value that lies between and including 10°C and 50°C and is preferably approximately 25 °C. This is a marked improvement in the accuracy of the conventional method. Advantageously, as components are operated at ever higher temperatures and closer to their material's thermal capability, this marked increase in accuracy can allow for an increase in component life predictions and improved design.

The method may comprise drawing at least one isotherm on the thermal paint coating on the component after the component has been operated. Further, the method comprises marking the at least one digital value on the thermal paint coating of the component and preferably within, near to or between the at least one isotherm(s). Alternatively, the method may comprise an electronic image of the component and either manual isotherms or software-computed isotherms are applied to the image along with the assigned digital value. Usually the component or parts of the component will experience a significant thermal gradient and there are likely to be many colour change boundaries. It is along these boundaries that the isotherms are drawn. The digital values are usually marked between two isotherms, although it is possible that there is just one isotherm bordering two different colour regions and then the digital values will simply be marked either side of the isotherm. It is possible for one isotherm to define a region, e.g. generally circular or elliptical, and therefore the digital value is marked within that region.

The step of processing the colour readings may comprise averaging the colour readings.

The step of processing the colour readings may comprise a group of colour readings comprising at least three colour readings and wherein the step of processing the at least one colour reading of the thermal paint coating on the calibration piece comprises ignoring any abnormal colour readings from the group of colour readings. Preferably the abnormal reading is greater than 10°C and possibly greater than 25 °C of the average of the other colour readings of that group of colour readings.

The component is manufactured from a material and the calibration piece may be manufactured from the same material as the component. Preferably the material is a high-temperature capable metal, metallic alloy or a ceramic.

The colour meter may be any one of a photo spectrometer or a colour sensor. The colour sensor may determine an RGB or L*a*b colourspace value.

The photospectrometer measures the wavelength of light reflected from the colour of the TPC.

The component may be of a gas turbine engine and preferably a combustor component or a turbine component or an exhaust component. Alternatively, the component may be of an engine such as diesel or petrol whether rotary or piston, or found in furnaces or ovens and glass production. The component can be metallic, although other materials are equally applicable to the present method such as ceramics.

The aforementioned problems can be solved by a system of determining a temperature profile of a component. The system comprising the component having a thermal paint coating, at least one calibration piece having a thermal paint coating, the thermal paint being the same for each coating and the thermal paint coating having an original colour, a colour meter to inspect the thermal paint coating on the calibration piece after exposing the at least one calibration piece to at least one predetermined temperature for at least one predetermined duration representative of at least one temperature experienced by the surface of the component during operation and to cause the thermal paint coating to change colour from its first colour to at least one further colour, and the thermal barrier coating on the component after operation of the component and determining a location of the at least one further colour of the thermal barrier coating and associating the at least one digital value to that location on the component, and a processor connected to the colour meter. The processor is arranged to record the colour readings of the colour meter of the at least one calibration piece in at least two different surface locations on the thermal barrier coating to obtain at least one colour reading and assign a digital value corresponding to the at least one colour reading which is indicative of the at least one predetermined temperature.

The system may comprise the component having at least one isotherm drawn on the thermal paint coating on the component after the component has been operated and the at least one digital value marked on the thermal paint coating of the component and preferably within, near to or between the at least one isotherm.

The system may be further defined by any one or more of the features mentioned herein.

### BRIEF DESCRIPTION OF THE DRAWINGS

The above mentioned attributes and other features and advantages of this invention and the manner of attaining them will become more apparent and the invention itself will be better understood by reference to the following description of embodiments of the invention taken in conjunction with the accompanying drawings, wherein
FIG. 1 shows part of a gas turbine engine in a sectional and schematic view, the gas turbine engine having components that can be subject to the present invention,
FIG. 2 is a graph showing L*a*b colour space values at temperature set points,
FIG. 3 is a view on a surface of a calibration piece,

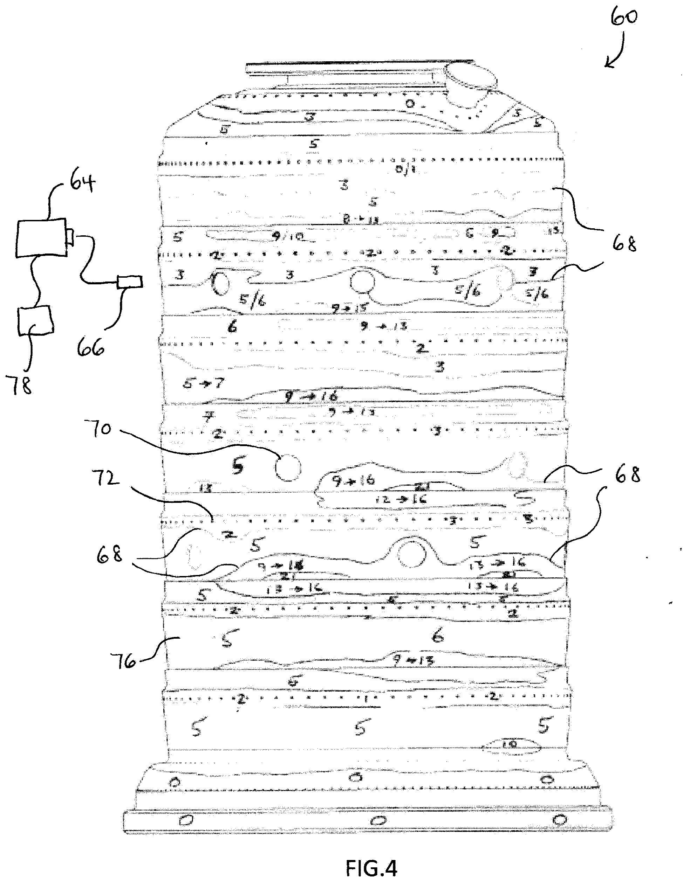

FIG. 4 is a combustor can of the gas turbine engine and which is an example of component suitable for analysis of the present invention,
FIG. 5 is a table of a random testing exercise to test the repeatability of the method of the present invention.

### DETAILED DESCRIPTION OF INVENTION

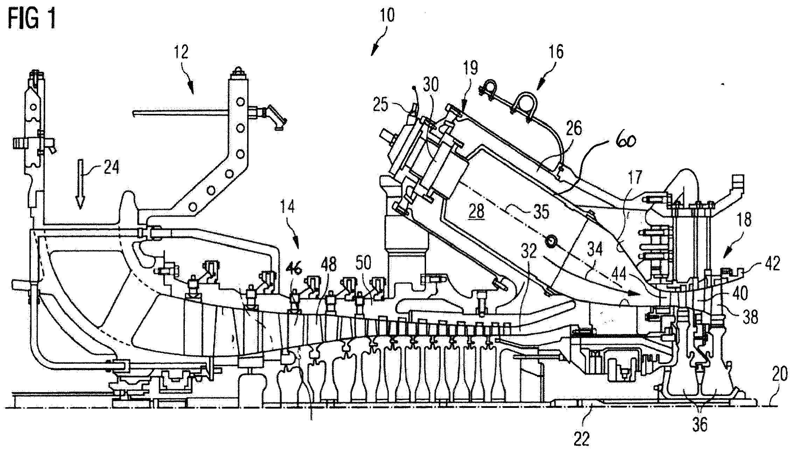

**FIG. 1** shows an example of a gas turbine engine 10 in a sectional view. The gas turbine engine 10 comprises, in flow series, an inlet 12, a compressor section 14, a combustor section 16 and a turbine section 18 which are generally arranged in flow series and generally arranged around and in the direction of a longitudinal or rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 14.

In operation of the gas turbine engine 10, air 24, which is taken in through the air inlet 12 is compressed by the compressor section 14 and delivered to the combustion section or burner section 16. The burner section 16 comprises a burner plenum 26, one or more combustion chambers 28 and at least one burner 30 fixed to each combustion chamber 28. The combustion chambers 28 and the burners 30 are located inside the burner plenum 26. The compressed air passing through the compressor 14 enters a diffuser 32 and is discharged from the diffuser 32 into the burner plenum 26 from where a portion of the air enters the burner 30 and is mixed with a gaseous or liquid fuel. The air/fuel mixture is then burned and the combustion gas 34 or working gas from the combustion is channelled through the combustion chamber 28 to the turbine section 18 via a transition duct 17.

This exemplary gas turbine engine 10 has a cannular combustor section arrangement 16, which is constituted by an annular array of combustor cans 19 each comprising the burner 30 and the combustion chamber 28, the transition duct 17 has a generally circular inlet that interfaces with the combustor chamber 28 and an outlet in the form of an annular segment. Each combustor chamber 28 is formed by a wall structure 60, which can either be a single wall or a double wall as is well known in the art. An annular array of transition duct outlets form an annulus for channelling the combustion gases to the turbine 18.

The turbine section 18 comprises a number of blade carrying discs 36 attached to the shaft 22. In the present example, two discs 36 each carry an annular array of turbine blades 38. However, the number of blade carrying discs could be different, i.e. only one disc or more than two discs. In addition, guiding vanes 40, which are fixed to a stator 42 of the gas turbine engine 10, are disposed between the stages of annular arrays of turbine blades 38. Between the exit of the combustion chamber 28 and the leading turbine blades 38 inlet guiding vanes 44 are provided and turn the flow of working gas onto the turbine blades 38.

The combustion gas from the combustion chamber 28 enters the turbine section 18 and drives the turbine blades 38 which in turn rotate the shaft 22. The guiding vanes 40, 44 serve to optimise the angle of the combustion or working gas on the turbine blades 38.

The turbine section 18 drives the compressor section 14. The compressor section 14 comprises an axial series of vane stages 46 and rotor blade stages 48. The rotor blade stages 48 comprise a rotor disc supporting an annular array of blades.

The present invention is described with reference to the above exemplary turbine engine having a single shaft or spool connecting a single, multi-stage compressor and a single, one or more stage turbine. However, it should be appreciated that the present invention is equally applicable to two or three shaft engines and which can be used for industrial, aero or marine applications.

The terms upstream and downstream refer to the flow direction of the airflow and/or working gas flow through the engine unless otherwise stated. The terms forward and rearward refer to the general flow of gas through the engine. The terms axial, radial and circumferential are made with reference to the rotational axis 20 of the engine.

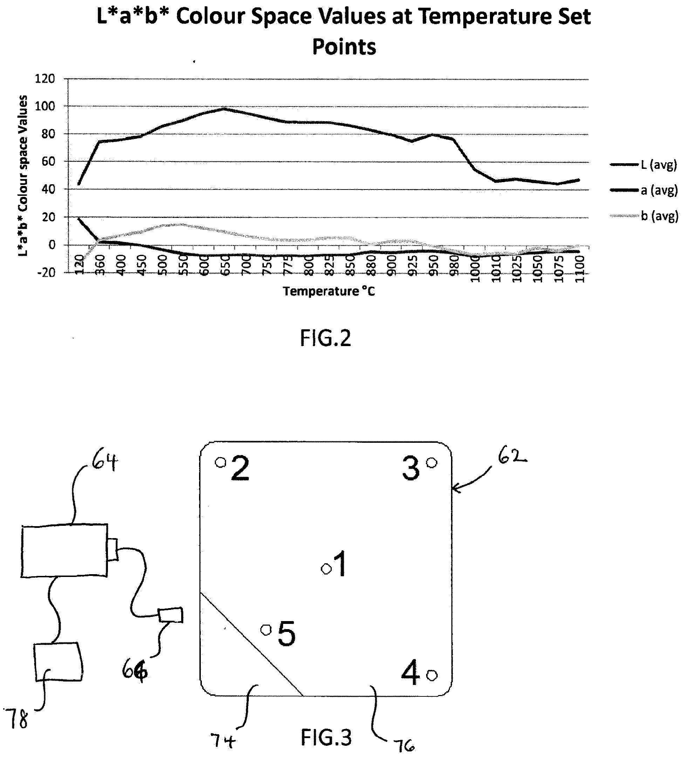

It is desirable and an objective to accurately determine the temperature and temperature profile experienced by a component of the gas turbine engine in operation. The results of which are used to calculate the in-service life of components and their design. A component, such as the combustor chamber 60 (see FIGS. 1) has a thermal paint coating (TPC) applied. The same TPC is applied to a calibration or test piece 62 (FIG. 3). The calibration piece 62 is the same material as the combustor chamber wall material 60. This material is usually a high-temperature capable metallic alloy as known in the art. The calibration piece is then exposed to a first or predetermined temperature and for a first or predetermined duration. The temperature and duration will be dependent on the particular thermal paint being used for any given application, but essentially at a temperature and duration where the thermal paint changes colour. In addition, the calibration piece 62 will be subject to a duration equivalent to the engine test in which the combustor chamber 28 is present.

The calibration piece 62 is then inspected with a colour meter 64 in at least two different locations on its surface to obtain a colour reading. Typically, five colour readings are taken and as shown in FIG.3, but other numbers of readings can be taken depending on the confidence level required. The colour reading is an average of the colour readings of the at least two locations. Multiple scans or readings of location points are used to account for any erroneous spikes or readings in the colour profile. The colour reading is processed and assigning a digital value corresponding to the colour reading which is indicative of the first or predetermined temperature. There is one calibration piece for each colour change point and in the example given herein and in the temperature range of particular interest (750 °C -1100°C) that means there is one calibration piece for every 25°C approximately.

The colour meter 64 is connected to a processor 78 or the processor 78 may be incorporated within the colour meter. The processor 78 records the colour readings and assigns the digital value. The processor 78 can store a library of digital values for each colour it reads or observes for each different thermal paint and possibly even predetermined durations and temperatures. Therefore, the step of calibrating is only required once for each particular thermal paint composition.

As mentioned the gas turbine engine is then operated with the component, the combustor chamber 28, for the first or predetermined duration. Typically this predetermined duration is 10 minutes at full capacity for a combustor chamber and for a turbine disc the duration can be 60 minutes. Other components can differ in duration, but the duration should be sufficient for the component to reach a stable temperature.

Finally, the combustor chamber 60 is inspected with the colour meter and at least one colour change location of the thermal paint coating is determined and associated to a digital value to that location on the component. This location is then marked on the surface of the combustor wall 28.

The colour meter or electronic colour reader 64 is a colour sensor and such a commercially available device is a Micro-Epsilon colourSENSOR LT-2-ST. This device is suitable because of its relatively compact size of the reader head. Other similar commercially available devices may be used. This device is particularly suitable for measuring components in the gas turbine engine because the available space and access can be severely restricted. In addition, there can be sharp temperature gradients around features of the combustor can like dilution holes 70 and effusion cooling holes 72. Thus the relatively small reader head 66 is capable of reaching and identifying these sharp thermal gradients. This particular device is capable of monitoring colour change within the wavelengths of 190-2500 nm and assigning a digital value in the L*a*b colourspace range. The size of the reader head 66 is approximately 25mm long.

The L*a*b colourspace is a well known metric where L = luminescence or 'lightness value', a is an axis which extends from green (-a) to red (+a) and b is another axis extending from blue (-b) to yellow (+b). The L*a*b colourspace is more detailed than the conventional red-green-blue (RGB) system. Nonetheless, the RGB system could also be employed by the present method as an alternative. As yet another alternative to the colour sensor, a photospectrometer could be used to view the distribution of the spectral intensity detected by a spectrometer and analyzed photoelectrically.

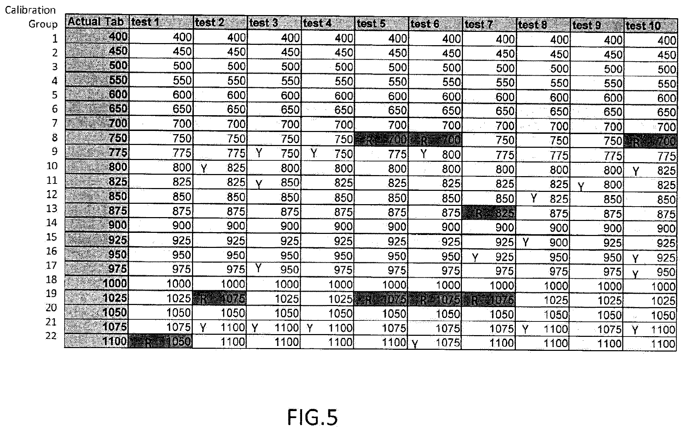

FIG. 2 is a graph showing the L*a*b figures as an average taken over five points of each calibration piece 62. The positions of the readings are taken at the positions shown on the calibration piece in FIG.3. In FIG. 5 the table is an illustration of a random testing exercise to test the repeatability of this method. After calibrating the test pieces 62 with TMC Hallcrest's MC153-14 paint, the calibration pieces 62 were randomly selected and the colour sensors' interpretation of the temperature was recorded. The values indicated in the table with a Y show an error of 25°C and values indicated with an R show an error of 50°C. In processing of the colour readings any abnormal colour readings are ignored. Preferably an abnormal reading is greater than 10°C and possibly greater than 25 °C, although the 'abnormality' will depend on the difference between the predetermined temperature increments. Any colour reading indicative of a temperature above say 25 °C, which is also the predetermined temperature steps, is removed and not used. The remaining values are all correct and are used to assign a calibration group e.g. 1 to 22, as indicated in the left hand column of the table in FIG. 5.

The isotherms 68 have been drawn on the combustion chamber wall and this can be done by visual inspection and by hand because the colour change borders are easily noticeable. Once all of the calibration data has been created (FIG. 2) the reader head 66 is swept across the combustor chamber wall surface having the thermal paint coating on it and having been subjected to the engine test. The colour meter device 64 indicates the calibration group that the particular swept region of the component relates to. The operator then marks the calibration group value on the component's surface and within each zone, i.e. within each region defined by the relevant isotherm 68.

In the future, it is possible that this method can be performed using a photo spectrometer as opposed to a colour sensor. The reason for this is where the colour sensor essentially takes a snapshot of the RGB or in this case L*a*b colourspace the spectrometer offers greater definition by measuring the wavelength of light reflected from the colour. However current photo-spectrometers are too large and bulky to be suitable for the intricate nature of some of the applications such as this combustor chamber wall.

The present method of reading thermal paint provides a significant reduction in processing time and an increased confidence in the reliability of the thermal paint tests. In turn, this leads to improved lifing estimations of hot gas turbine components and even improved design. The main reason for this improvement is to remove the subjective nature of visual thermal paint reading. Currently there is a reliance on specially trained operators to read thermal paint by eye. This can then only give accuracy pre-specified by the thermal paint manufacturer often with 100°C between colour change-points. With the present method of digitising the results an accuracy of 25°C increments can reliably be achieved.

It is intended that the present method of determining a temperature profile of a component can be applied to any component that incurs a significant thermal input in any industry. In addition to gas turbine applications, suitable components can be found in other engines such as diesel or petrol, rotary or piston engines also in furnaces or ovens and glass production for example. The component can be metallic, although other materials are equally applicable to the present method such as ceramics.

## Claims

1. A method of determining a temperature profile of a component (60) having a thermal paint coating (76), the method comprising the steps of:
providing at least one calibration piece (62) with the thermal paint coating (76), the thermal paint coating (76) having an original colour,
exposing the at least one calibration piece (62) to at least one predetermined temperature for at least one predetermined duration representative of at least one temperature experienced by the surface of the component (60) during operation and to cause the thermal paint coating (76) to change colour from its first colour to at least one further colour,
inspecting the at least one calibration piece (62) with a colour meter (64) in at least two different surface locations on the thermal barrier coating (76) to obtain at least one colour reading, processing the at least one colour reading and assigning a digital value corresponding to the at least one colour reading which is indicative of the at least one predetermined temperature,
operating the component (60) for the at least one predetermined duration,
inspecting the thermal barrier coating (76) on the component (60) with the colour meter (64) after operation of the component and determining a location of the at least one further colour of the thermal barrier coating (76) and associating the at least one digital value to that location on the component (60).

2. The method of claim 1 comprising the step of
providing a plurality of calibration pieces (62) for each at least one predetermined temperature.

3. The method of any one of claims 1-2 comprising the step of
exposing at least two calibration pieces (62) at each of a number of predetermined temperatures.

4. The method of any one of claims 2-3 wherein
a consecutive series of predetermined temperatures comprises at least two predetermined temperatures separated by a temperature value that lies between and including 10°C and 50°C and is preferably approximately 25 °C.

5. The method of any one of claims 1-5 comprising the step of:
drawing at least one isotherm (68) on the thermal paint coating (76) on the component (60) after the component has been operated.

6. The method of any one of claims 1-6 comprising the steps of:
marking the at least one digital value on the thermal paint coating (76) of the component (60) and preferably within, near to or between the at least one isotherm (68).

7. The method of any one of claims 1-6 wherein the step of processing the at least one colour reading comprises averaging the at least one colour readings.

8. The method of any one of claims 1-7 wherein
a group of colour readings comprises at least three colour readings and wherein
the step of processing the at least one colour reading of the thermal paint coating on the calibration piece comprises ignoring any abnormal colour readings from the group of colour readings,
preferably the abnormal reading is greater than 10°C and possibly greater than 25 °C of the average of the other colour readings of that group of colour readings.

9. The method of any one of claims 1-8 wherein the component (60) is manufactured from a material and the calibration piece (62) is manufactured from the same material as the component (60), preferably the material is a high-temperature capable metallic alloy.

10. The method of any one of claims 1-9 wherein the colour meter is any one of a photo-spectrometer or a colour sensor.

11. The method of claim 10 wherein the colour sensor determines an RGB or L*a*b colourspace value.

12. The method of claim 10 wherein the photo-spectrometer measuring the wavelength of light reflected from the colour of the thermal paint coating.

13. The method of any one of claims 1-12 wherein the component is of a gas turbine engine and preferably a combustor component or a turbine component or an exhaust component.

14. A system of determining a temperature profile of a component (60), the system comprising
the component (60) having a thermal paint coating (76),
at least one calibration piece (62) having a thermal paint coating (76), the thermal paint being the same for each coating (76) and the thermal paint coating (76) having an original colour,
a colour meter (64) to inspect
the thermal paint coating (76) on the calibration piece (62) after exposing the at least one calibration piece (62) to at least one predetermined temperature for at least one predetermined duration representative of at least one temperature experienced by the surface of the component (60) during operation and to cause the thermal paint coating (76) to change colour from its first colour to at least one further colour, and
the thermal barrier coating (76) on the component (60) after operation of the component and determining a location of the at least one further colour of the thermal barrier coating (76) and associating the at least one digital value to that location on the component (60), and
a processor (78) connected to the colour meter (64), the processor (78) arranged to
record the colour readings of the colour meter (64) of the at least one calibration piece (62) in at least two different surface locations on the thermal barrier coating (76) to obtain at least one colour reading and
assign a digital value corresponding to the at least one colour reading which is indicative of the at least one predetermined temperature.

15. The system as claimed in claim 14 wherein the system comprises the component having
at least one isotherm (68) drawn on the thermal paint coating (76) on the component (60) after the component has been operated and
the at least one digital value marked on the thermal paint coating (76) of the component (60) and preferably within, near to or between the at least one isotherm (68).
